Europäisches Patentamt

European Patent Office

Office européen des brevets

(19)

(11) Numéro de publication: **0 066 032**
**A1**

## (12) DEMANDE DE BREVET EUROPEEN

(21) Numéro de dépôt: 81810210.5

(22) Date de dépôt: 01.06.81

(51) Int. Cl.³: **F 16 L 47/04**
**F 16 L 33/22**

(43) Date de publication de la demande:
**08.12.82 Bulletin 82/49**

(84) Etats contractants désignés:
**AT BE CH DE FR GB IT LI LU NL SE**

(71) Demandeur: **PABRECO S.A.**
**2, Rte Mgr. Besson**
**CH-1700 Fribourg(CH)**

(72) Inventeur: **Mattes, Rolf**
**8, Rte Mgr. Besson**
**CH-1700 Fribourg(CH)**

(74) Mandataire: **Moinas, Michel**
**c/o Moinas & Cie Case Postale 88 5, rue Saint-Léger**
**CH-1211 Genève 4(CH)**

(54) **Raccord à vis pour tuyaux en matière plastique.**

(57) Le raccord à vis comporte une pièce réceptrice (1) pourvue d'un évidement annulaire conique (2) et un écrou de recouvrement (11) muni d'une cavité interne (6). Une bague de serrage (9), vient se loger dans l'évidement (2) et est rendue solidaire de l'écrou (11).

La cavité (6) ménagée dans l'écrou (11) est tournée vers l'arrière, tandis que la bague de serrage (9) est pourvue dans sa partie périphérique externe d'une lèvre (10) qui vient s'insérer dans la cavité (6).

Application aux circuits pneumatiques et hydrauliques basse pression.

FIG.1

EP 0 066 032 A1

Croydon Printing Company Ltd.

COMPLETE DOCUMENT

## RACCORD A VIS POUR TUYAUX EN MATIERE PLASTIQUE

L'invention a trait à un raccord à vis pour tuyau en matière plastique comprenant une pièce réceptrice de l'extrémité du tuyau et un écrou de recouvrement.

Les raccords à vis pour tuyaux en matière plastique comprennent généralement plusieurs parties. Le montage correct des différentes pièces est essentiel à l'obtention d'un assemblage étanche, ce qui dans certains cas peut présenter des difficultés pour les non-spécialistes.

L'invention se propose de fournir un raccord à vis pour tuyau en matière plastique comprenant une pièce réceptrice de l'extrémité du tuyau et un écrou de recouvrement dont le montage soit facile et ait lieu pour ainsi dire irrévocablement, de sorte qu'aucune connaissance spécialisée ne soit requise.

Le raccord selon l'invention est caractérisé par le fait que la pièce réceptrice est pourvue d'un évidement conique annulaire, que l'écrou de recouvrement comporte dans sa face interne une cavité, que le tuyau à raccorder et une bague de serrage sont logés dans l'évidement conique annulaire et que la bague de serrage est rendue solidaire de l'écrou de serrage.

Dans une première forme d'exécution, la cavité ménagée dans l'écrou est tournée vers l'arrière et la bague de serrage est pourvue dans sa partie périphérique externe d'une lèvre qui vient s'insérer dans la cavité tournée vers l'arrière.

Dans une seconde forme d'exécution, la bague de serrage présente un prolongement vers l'arrière, qui pince la tête de l'écrou.

Ces agencements permettent d'effectuer le raccordement en plaçant facilement l'extrémité du tuyau dans le logement conique de la pièce réceptrice et en vissant simplement l'écrou dans lequel la bague de serrage a été disposée.

Lorsqu'on désire désassembler le raccord, l'écrou emporte automatiquement la bague de serrage, de sorte qu'il suffit alors uniquement de retirer l'extrémité du tuyau.

Pour assurer une étanchéité particulièrement bonne du raccord, l'évidement conique annulaire peut comporter une extrémité cylindrique ou une extrémité faisant saillie. Ceci présente l'avantage de comprimer l'extrémité du tuyau dans la partie cylindrique de l'évidement conique par l'action de la bague de serrage.

L'une des surfaces de l'évidement conique dont est pourvue la pièce réceptrice peut comporter une denture de manière à améliorer la fixation de l'extrémité du tuyau.

L'écrou comporte, pour le bloquer et éviter ainsi qu'on puisse le visser trop loin, une partie horizontale dans sa face interne; de même, la pièce réceptrice est pourvue d'une partie horizontale faisant face à celle de l'écrou.

En variante, un embout, par exemple en laiton, peut être enfoncé à l'intérieur de la pièce réceptrice, de telle manière qu'il forme l'une des faces (la face interne) de l'évidement conique. La pièce réceptrice est ainsi en deux parties.

Les raccords peuvent être utilisés pour tous les types de tuyaux, pour peu que ceux-ci soient suffisamment déformables. On peut donc raccorder aussi des tuyaux multi-couches ou comportant une âme métallique.

Le dessin annexe illustre, à titre d'exemple, l'invention dans ses deux formes d'exécution.

La figure 1 représente le raccord en coupe dans sa première forme d'exécution, une fois monté.

La figure 2 montre un tel raccord, en coupe, muni d'un embout dans la pièce réceptrice, une fois monté.

La figure 3 représente le raccord en coupe dans sa première forme d'exécution, une fois monté.

Les figures 4 et 5 représentent un raccord du type de celui de la figure 3, pour un tuyau avec une âme métallique. Les parties droites sont représentées montées, tandis que les parties gauche sont à deux stades différents de montage.

Comme présentée sur ces figures, la pièce réceptrice 1 comporte un évidement annulaire conique 2. La face interne 3 de l'évidement conique peut comporter des bossages en forme de dents de scie 3a. La face 4 de l'évidement conique 2 en regard de la face 3 se termine dans sa partie supérieure par une surface horizontale 5. L'extrémité 7 de l'évidement conique 2 peut être cylindrique.

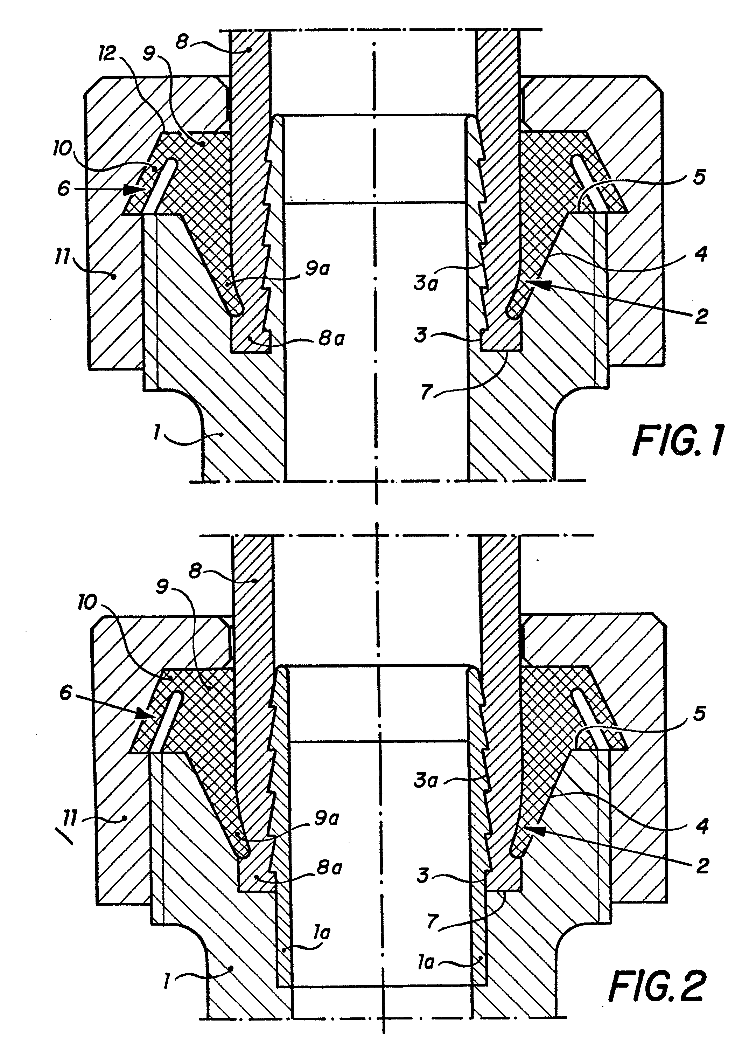

Sur les figures 1 et 2, l'écrou de recouvrement 11 est pourvu dans sa face interne d'une cavité 6 tournée vers l'arrière. Une bague 9 comportant un prolongement 9a en forme de cône dans l'axe du tuyau sert à accoupler solidement le tuyau en matière plastique 8 dans l'évidement conique 2.

Le tuyau en matière plastique 8 ainsi que la bague de serrage 9 sont logés dans l'évidement conique 2. De plus, la bague de serrage 9 comporte une lèvre 10 qui vient se loger dans la cavité 6.

Lors du serrage de l'écrou 11, l'extrémité 8a du tuyau 8 est pressée dans l'évidement conique 2 et en particulier dans sa partie cylindrique 7 par l'intermédiaire de la bague de serrage 9.

La forme de l'extrémité de l'évidement conique permet de pouvoir ressortir le tuyau 8 en desserrant l'écrou. La cavité 6 assure que la bague est automatiquement solidaire de l'écrou lors du desserrage.

Pour bloquer l'écrou et éviter ainsi qu'on puisse le visser trop loin, la face interne de celui-ci est pourvue d'une partie horizontale 12 en regard de la partie horizontale 5 de la pièce réceptrice.

Dans la figure 2 plus précisément, un embout 1a forme la face interne de la pièce réceptrice 1, qui, de ce fait se trouve être réalisée en deux parties.

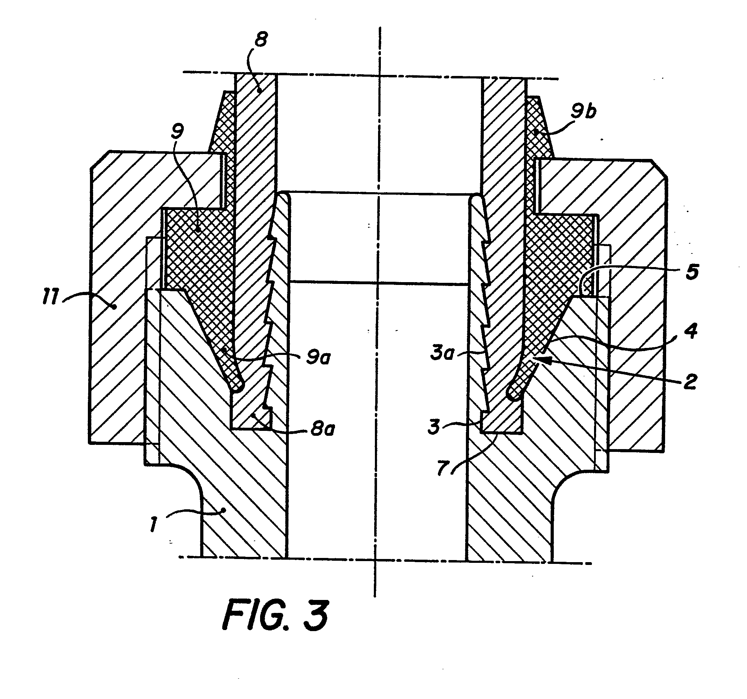

Dans la figure 3, on a représenté un raccord de la deuxième forme d'exécution, les références correspondant aux figures précédentes. La cavité 6 est droite, mais la bague de serrage 9 comporte un prolongement 9b qui recouvre la tête de l'écrou de recouvrement 11 et la pince.

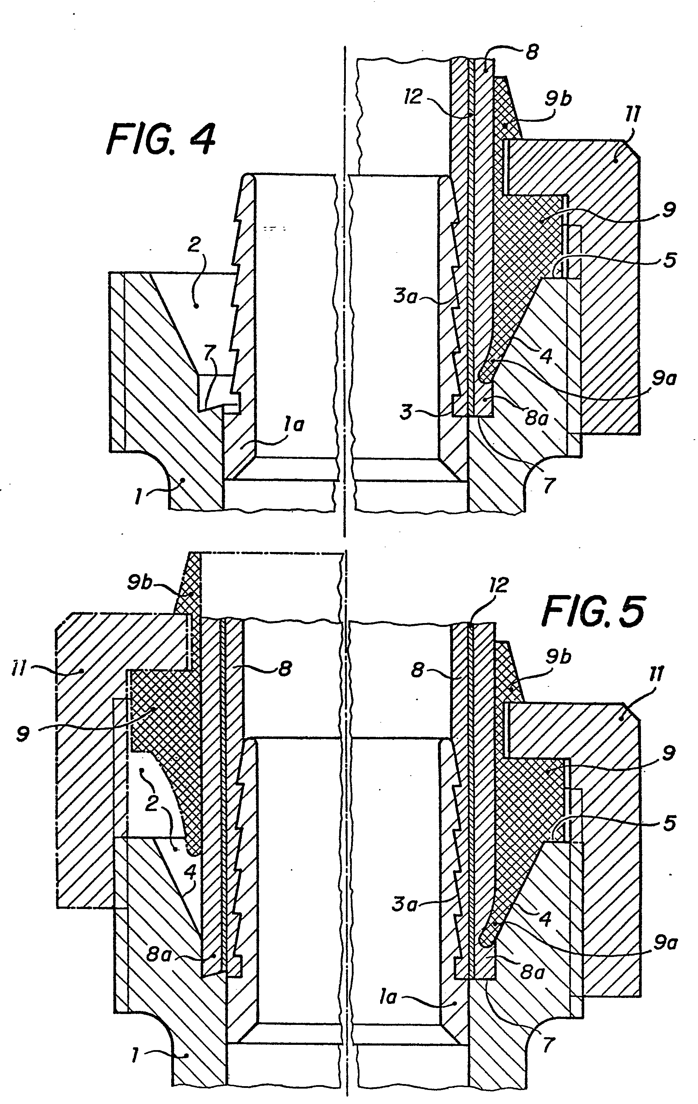

Les figures 4 et 5 reprennent la forme d'exécution de la figure 3, la pièce réceptrice 1 comprenant comme face interne un embout 1a et les tuyaux à raccorder renferment une âme métallique 12. Les parties droites de ces figures montrent raccord assemblé comme sur les figures précédentes.

La partie gauche de la figure 4 représente la pièce réceptrice 1, ici en deux parties puisqu'avec un embout 1a, l'évidement 2 et l'extrémité de l'évidement 7 qui, dans ce cas, fait saillie.

La partie gauche de la figure 7 montre un stade intermédiaire du montage où le tuyau 8, avec son âme métallique 8a, a été engagé en butée dans l'évidement conique 2. L'écrou de recouvrement 11, garni de la bague de serrage 5 le pinçant par son prolongement 9b, a été enfilé sur le tuyau 8. Le serrage peut commencer et, une fois celui-ci terminé, on se retrouve dans la situation de la partie droite de cette même figure.

On conçoit que le montage du raccord soit très simple, du fait qu'aucune pièce ne puisse se perdre et que l'assemblage successif des différentes pièces aille de soi.

Ce raccord est utilisable pour plusieurs montages et démontages. Il présente de grands avantages pour les circuits pneumatiques en général et pour les circuits hydrauliques basse pression en particulier. Il est économique de conception et de fabrication tout en étant parfaitement étanche.

## REVENDICATIONS

1. Raccord à vis pour tuyau en matière plastique comprenant une pièce réceptrice (1) de l'extrémité du tuyau et un écrou de recouvrement (11), caractérisé par le fait que la pièce réceptrice (1) est pourvue d'un évidement conique annulaire (2), que l'écrou de recouvrement comporte dans sa face interne une cavité (6), que le tuyau à raccorder et une bague de serrage (9) sont logés dans l'évidement conique annulaire (2) et que la bague de serrage (9) est rendue solidaire de l'écrou de recouvrement (11).

2. Raccord à vis selon la revendication 1, caractérisé par le fait que la cavité (6) ménagée dans l'écrou (11) est tournée vers l'arrière et que la bague de serrage est pourvue dans sa partie périphérique externe d'une lèvre (10) qui vient s'insérer dans la cavité (6) tournée vers l'arrière.

3. Raccord à vis selon la revendication 1, caractérisé par le fait que la bague de serrage (9) présente un prolongement (9b) vers l'arrière qui pince la tête de l'écrou (11).

4. Raccord à vis selon la revendication 1, caractérisé par le fait que l'évidement conique annulaire (2) comporte une extrémité (7) cylindrique ou faisant saillie.

5. Raccord à vis selon la revendication 1, caractérisé par le fait que la bague de serrage (9) comporte un prolongement conique (9a) dans l'axe du tuyau (8).

6. Raccord à vis selon la revendication 1, caractérisé par le fait que l'une des faces de l'évidement
   conique annulaire (2) est pourvue de bossages en
   forme de dents (3a).

7. Raccord à vis selon la revendication 1, caractérisé par le fait qu'il comprend un embout (1a) par exemple en laiton, à la place de la face interne de
   l'évidement annulaire conique (2).

8. Utilisation du raccord à vis selon la revendication
   1 dans le montage des circuits pneumatiques et hydrauliques basse pression

*FIG.1*

*FIG.2*

FIG. 3

# FIG. 4

# FIG. 5

**0066032**

Office européen
des brevets

**RAPPORT DE RECHERCHE EUROPEENNE**

Numéro de la demande

EP 81 81 0210

| | DOCUMENTS CONSIDERES COMME PERTINENTS | | | CLASSEMENT DE LA DEMANDE (Int. Cl. 3) |
|---|---|---|---|---|
| Catégorie | Citation du document avec indication, en cas de besoin, des parties pertinentes | | Revendication concernée | |
| X | FR - A - 2 351 343 (PARKER HANNIFIN) | | | F 16 L 47/04 <br> F 16 L 33/22 |
| | Page 1, ligne 34 - page 2, ligne 32; figure 1 * | | 1-5,7, 8 | |
| Y | | | 2,4,8 | |
| | | | | |
| Y | US - A - 2 440 178 (LOFQUIST) | | | |
| | * Colonne 3, lignes 7-43 * | | 2,4,8 | |
| | | | | |
| Y | US - A - 3 633 944 (HAMBURG) | | | **DOMAINES TECHNIQUES RECHERCHES (Int. Cl. 3)** |
| | * Figure 5 * | | 2 | F 16 L |
| | | | | |
| X | FR - A - 2 302 476 (LOTIGIE) | | | |
| | * Page 4, ligne 9 - page 5, ligne 31 * | | 1,4-8 | |

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 17-03-1982 | ATKINS |

OEB Form 1503.1 06.78